# EUROPÄISCHE PATENTSCHRIFT

(11) **EP 3 581 017 B1**
(45) Veröffentlichungstag und Bekanntmachung des Hinweises auf die Patenterteilung: **29.12.2021**
(21) Anmeldenummer: 18177550.3
(22) Anmeldetag: 13.06.2018
(51) Int. Cl.: A01D 80/02

(54) **FEDERZINKEN ZUM KREISELWENDEN LANDWIRTSCHAFTLICHEN HALM-/BLATTGUTS**
SPRING TINE FOR TEDDING AGRICULTURAL STALK/LEAF-SHAPED ARTICLES
DENTS DE RESSORT DESTINÉES AU GIROFANAGE DE PAILLE / PRODUITS EN FEUILLES AGRICOLES

(43) Veröffentlichungstag der Anmeldung: 18.12.2019
(73) Patentinhaber: Kverneland Group Kerteminde AS, 5300 Kerteminde (DK)
(72) Erfinder: Hirt, Christian, 78086 Brigachtal (DE)
(74) Vertreter: Grünecker Patent- und Rechtsanwälte PartG mbB

(56) Entgegenhaltungen:
- EP-A1- 1 062 858
- EP-A1- 1 769 672
- EP-A1- 1 800 533

## Beschreibung

Die Erfindung betrifft einen Federzinken zum Kreiselwenden landwirtschaftlichen Halm-/Blattguts und einen Kreiselwender.

Gemähtes und getrocknetes Halm- und/oder Blattgut kann bekanntermaßen als Viehfutter verwendet oder zu solchem weiterverarbeitet werden. Die Trocknung wird mit Kreiselwendern (auch Kreiselheuer, Heuwender oder Zettkreisel genannt) gefördert, indem man das frische Mähgut zuerst gleichmäßig auf der Grasnarbe verteilt und daraus entstandenes Anwelkgut mehrmals wendet, bis der gewünschte Trocknungsgrad je nach Konservierungsart erreicht ist.

Kreiselwender arbeiten mit wenigstens zwei gegenläufig rotierenden und schräg angestellten Kreiseln mit Zinkenarmen, an denen Federzinken starr befestigt sind. Die Federzinken werden somit im Gegensatz zu den Zinken von Kreiselschwadern bei der Abgabe des Mähguts nicht um radiale Achsen geschwenkt.

Zur verbesserten Aufnahme von Mähgut an Kreiselschwadern sind aus der DE 6908109 U bogenförmige Federzinken bekannt. Diese heben an ihren freien Endbereichen das liegende Mähgut vom Boden ab.

Werden solche Zinkenformen bei Kreiselwendern eingesetzt, lässt sich zwar die Aufnahme von Mähgut prinzipiell verbessern. Jedoch neigen solche Federzinken aufgrund ihrer starren Befestigung bei der Abgabe des Mähguts dazu, dieses zu weit mitzuziehen.

Alternative Zinkenformen für Kreiselwender sind ferner aus der EP 1 967 060 A1 sowie DE 10 2007 010 522 A1 bekannt.

Die EP 1 769 672 A1 offenbart ferner einen Schwader, an dessen Rotorarmen jeweils vier Federzinken befestigt sind. Diese weisen bezüglich ihrer Umlaufrichtung identische innere und äußere Schenkel auf. In der Arbeitsstellung schließen sowohl die inneren als auch die äußeren Schenkel der Federzinken an ihren Endabschnitten einen Winkel mit der Arbeitsrichtung ein, der größer als 90° ist. Zudem können am inneren Bereich des Rotorarms befestigte Federzinken weniger gekrümmt sein als die diesbezüglich außen befestigten Federzinken. Zudem können die inneren Federzinken geradlinig ausgebildet sein. Alle Federzinken liegen dann an ihren unteren freien Enden auf einer radialen Linie und weisen in der Arbeitsstellung senkrecht nach unten.

Die EP 1 800 533 A1 offenbart zudem einen Schwader mit Federzinken, bei denen der jeweils äußere Zinkenschenkel geradlinig verläuft und im Arbeitsbetrieb im Wesentlichen senkrecht nach unten ausgerichtet ist. Der jeweils innere Zinkenschenkel ist abgewinkelt und kann an seinem jeweiligen unteren Endabschnitt mit der Umlaufrichtung sowohl einen kleineren Winkel als 90° einschließen als auch einen größeren Winkel als 90°. Der geradlinige äußere Zinkenschenkel läuft dem jeweils zugehörigen inneren Zinkenschenkel jeweils voraus.

Es besteht jedoch weiterhin Verbesserungsbedarf dahingehend, sowohl die Aufnahme als auch die Abgabe landwirtschaftlichen Halm- und/oder Blattguts zu optimieren.

Die gestellte Aufgabe wird mit einem Federzinken nach Anspruch 1 gelöst. Demnach dient dieser zum Kreiselwenden landwirtschaftlichen Halm- und/oder Blattguts, hier allgemein auch Mähgut, Erntegut oder Futter genannt, und umfasst: einen in Umlaufrichtung bzw. Arbeitsrichtung des Federzinkens inneren Zinkenschenkel mit einem freiem Endabschnitt, der mit der Arbeitsrichtung einen vertikalen Winkel von weniger als 90° ausbildet, und mit einem nach oben anschließenden Arbeitsabschnitt, der vorzugsweise ebenso einen vertikalen Winkel von weniger als 90° mit der Arbeitsrichtung ausbildet; und einen bezüglich der Arbeitsrichtung äußeren Zinkenschenkel mit einem freien Endabschnitt, der mit der Arbeitsrichtung einen vertikalen Winkel von mehr als 90° ausbildet, und mit einem nach oben anschließenden Arbeitsabschnitt, der bogenförmig gekrümmt und dem inneren Zinkenschenkel nachlaufendend ausgebildet ist.

Der Endabschnitt des inneren Zinkenschenkels arbeitet somit schleppend, der Endabschnitt des äußeren Zinkenschenkels hebt das liegende Mähgut vom Boden ab.

Unter vertikalen Winkeln sind solche zu verstehen, die bei horizontal ausgerichtetem Kreisel in einer mit der jeweiligen Arbeitsrichtung gemeinsamen senkrechten Ebene (Tangentialebene bezüglich der Umlaufbahn) liegen.

Die Umlaufrichtung des zugeordneten Kreisels und der daran befestigten Federzinken wird der Einfachheit halber auch als Arbeitsrichtung des Federzinkens bezeichnet. Die gedachte Arbeitsrichtung kann zum besseren Verständnis der beschriebenen Konturen und zugunsten einer eindeutigen Angabe von Abmessungen als gerade Linie verstanden werden. Es versteht sich hierbei von selbst, dass sich die Federzinken im Arbeitsbetrieb dann entlang kreisförmiger Bahnen bewegen. Eine zur gedachten Arbeitsrichtung parallele Ausrichtung wäre im Arbeitsbetrieb dann analog als tangentiale Ausrichtung zur kreisförmig verlaufenden Umlaufrichtung zu verstehen.

Die Anordnung des inneren und äußeren Zinkenschenkels führt zu einer besseren Durchmischung des Halm- und/oder Blattguts sowie daraus resultierend zu kürzeren Trocknungszeiten bis zur Herstellung der Futtermasse. Die beschriebene Form der Zinkenschenkel führt außerdem zu geringerer Verschmutzung Halm- und/oder Blattguts und höherer Produktionsleistung.

Vorteil der besseren Mähgut-/Futteraufnahme ist eine geringere Drehzahl gegenüber herkömmlichen Zinken. Das hat den positiven Effekt von weniger Bröckelverlusten im trockenen Futter (Heu), geringere Futterverschmutzung sowie Treibstoffeinsparung.

Der äußere Zinkenschenkel weist eine nachlaufende bogenförmige Kontur auf, die das Abheben des Halm- und/oder Blattguts vom Boden weg nach oben begünstigt. Dies führt dazu, dass das Halm- und/oder Blattgut effektiver aufgenommen sowie höher und weiter abgeworfen wird mit der Folge einer besseren Trennung und Verteilung, wodurch sich die Trocknungszeit verkürzen lässt.

Vorzugsweise verlaufen der innere und äußere Zinkenschenkel im Wesentlichen in zur Arbeitsrichtung parallelen Vertikalebenen. Im Arbeitsbetrieb resultiert daraus eine zur jeweiligen

Umlaufbahn im Wesentlichen tangentiale Anordnung der Zinkenschenkel mit dem Vorteil, dass das Halm- und/oder Blattgut bei der Abgabe effektiv nach außen abgleiten kann und kein nennenswertes Nachziehen oder Verweilen von Mähgut auf den Federzinken mehr auftritt.

Vorzugsweise sind die freien Enden des inneren und äußeren Zinkenschenkels quer zur Arbeitsrichtung in einem größeren Abstand zueinander angeordnet als entlang der Arbeitsrichtung. Überraschenderweise hat sich dies für eine gleichermaßen effektive Aufnahme und eine ungehinderte Abgabe von Halm- und/oder Blattgut als besonders wirksam herausgestellt.

Als freie Enden der Zinkenschenkel sind insbesondere die freien Stirnseiten ihrer Endabschnitte zu verstehen.

Vorzugsweise sind die freien Enden des inneren und äußeren Zinkenschenkels quer zur Arbeitsrichtung in einem Abstand von wenigstens 60 mm und insbesondere von wenigstens 100 mm voneinander angeordnet.

Vorzugsweise liegen die freien Enden des inneren und äußeren Zinkenschenkels auf einer gemeinsamen und orthogonal quer zur Arbeitsrichtung verlaufenden Linie. Prinzipiell wäre auch ein nachlaufendes oder vorauslaufendes freies Ende des äußeren Zinkenschenkels denkbar, sofern dieser im darüber liegenden Arbeitsabschnitt nachlaufend ausgebildet ist.

Liegen die beiden Zinkenschenkel auf der gemeinsamen Linie, ist ihr Abstand voneinander entlang der Arbeitsrichtung folglich gleich Null. Die freien Enden des inneren und äußeren Zinkenschenkels können entlang der Arbeitsrichtung beispielsweise in einem Abstand von bis zu 40 mm voneinander angeordnet sein.

Vorzugsweise bildet eine in der Draufsicht gezogene Verbindungslinie zwischen einem hinteren Endabschnitt bzw. einem maximal nachlaufenden Abschnitt des äußeren Zinkenschenkels und dem freien Ende des innenliegenden Zinkenschenkels einen quer zur Arbeitsrichtung definierten Nachlaufwinkel von 5-45°. Dies führt bei den beschriebenen Zinkenschenkeln mit ihrer gegenläufigen Ausrichtung der Endabschnitte und den unterschiedlichen Konturen ihrer Arbeitsabschnitte zu einer besonders effektiven Arbeitsweise.

Vorzugsweise weist der äußere Zinkenschenkel einen maximalen Nachlaufabstand von 20 bis 80 mm, insbesondere von 30 bis 60 mm, vom inneren Zinkenschenkel auf. Unter dem Nachlauf ist ein Abstand der Zinkenschenkel voneinander entlang der Arbeitsrichtung zu verstehen. Der maximale Nachlaufabstand ist der größte innerhalb der gesamten Arbeitsbereiche der Federzinken vorkommende Abstand (in Arbeitsrichtung) zwischen den Zinkenschenkeln.

Ebene, einen Winkel von 95-120° mit der Arbeitsrichtung ein. Dadurch wird das Halm- und/oder Blattgut effektiv vom Boden abgehoben. Dies vermindert die Reibung zwischen Grasnarbe und Halm- und/oder Blattgut, auch dessen Verschmutzung wird deutlich reduziert. Vorzugsweise verläuft der innere Zinkenschenkel im Arbeitsabschnitt, insbesondere im gesamten Arbeitsabschnitt, geradlinig. Der innere Zinkenschenkel kann dann im gesamten Arbeitsabschnitt schleppend arbeiten.

Vorzugsweise schließt der innere Zinkenschenkel im Arbeitsabschnitt und/oder an seinem freien Ende einen vertikalen Winkel von 75-87° mit der Arbeitsrichtung ein. Dies hat sich als besonders effektiv für eine kontrollierte und ungehinderte Abgabe des Halm- und/oder Blattgut herausgestellt.

Vorzugsweise ist der äußere Zinkenschenkel länger als der innere Zinkenschenkel, insbesondere um 1 bis 50 mm. Besonders vorteilhaft ist ein um 5 bis 25 mm längerer äußerer Zinkenschenkel. Der Kreisel mit den Federzinken ist schräg angestellt. Zudem stehen die Federzinken bezüglich der Kreiselarme vorzugsweise schräg nach außen und unten hin ab. Beide Zinkenschenkel haben dann im Wesentlichen den gleichen Arbeitsabstand von der Grasnarbe und können daher gleichermaßen effektiv Halm- und/oder Blattgut aufnehmen. Vorstellbar ist aber auch eine im Wesentlichen gleiche Arbeitslänge beider Zinkenschenkel.

Vorzugsweise umfasst der Federzinken ferner Federwendeln, die die äußeren und inneren Zinkenschenkel mit einem zentralen Befestigungsabschnitt einstückig verbinden. Dies ermöglicht eine gleichermaßen stabile und einfache Konstruktion des Federzinkens und entsprechende Befestigung an einem Zinkenarm, beispielsweise mittels Klemmmechanismus.

Die gestellte Aufgabe wird außerdem mit einem Kreiselwender nach Anspruch 15 gelöst. Demnach dient dieser zum Wenden von landwirtschaftlichem Halm- und/oder Blattgut und umfasst wenigstens zwei gegenläufig drehbare Kreisel mit davon starr abstehenden Zinkenarmen, an denen Federzinken nach wenigstens einem der vorigen Ansprüche befestigt sind.

Eine bevorzugte Ausführungsform der Erfindung ist zeichnerisch dargestellt. Es zeigen:
- Figur 1: eine seitliche Ansicht des Federzinkens;
- Figur 2: eine Ansicht des Federzinkens in Arbeitsrichtung;
- Figur 3: eine Ansicht des Federzinkens von unten; und
- Figur 4: eine schematische Draufsicht auf einen Kreiselwender.

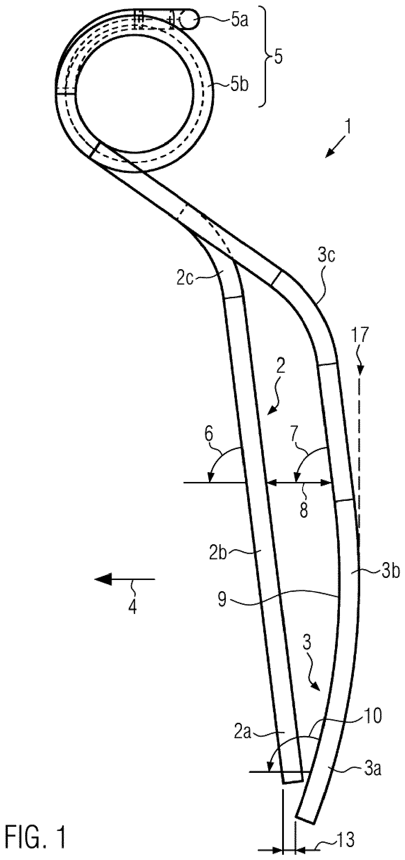

Wie die Figur 1 erkennen lässt, umfasst der Federzinken 1 einen im Arbeitsbetrieb inneren Zinkenschenkel 2 und einen im Arbeitsbetrieb äußeren Zinkenschenkel 3. Ein freier Endabschnitt 2a und ein nach oben daran anschließender Arbeitsabschnitt 2b des inneren Zinkenschenkels 2 bilden mit der Arbeitsrichtung 4 einen in vertikaler Ebene definierten Winkel 6 von weniger als 90° aus. Der freie Endabschnitt 2a und der Arbeitsabschnitt 2b sind vorzugsweise geradlinig ausgebildet. Dagegen bildet ein freier Endabschnitt 3a des äußeren Zinkenschenkels 3 mit der Arbeitsrichtung 4 einen in vertikaler Ebene definierten Winkel 10 von mehr als 90° aus. Ein an den freien Endabschnitt 3a nach oben anschließender Arbeitsabschnitt 3b des äußeren Zinkenschenkels 3 ist bogenförmig gekrümmt und dem inneren Zinkenschenkel 2 im Arbeitsbetrieb nachlaufend ausgebildet.

Der Federzinken 1 umfasst ferner eine prinzipiell bekannte mittige Aufhängung 5 mit einer näherungsweise U-förmig und/oder V-förmig gebogenen Befestigungslasche 5a und mit Vorspannung gewickelten Federwendeln 5b, die jeweils einstückig in einen gekröpften Befestigungsabschnitt 2c, 3c des inneren und äußeren Zinkenschenkels 2, 3 übergehen.

Die Befestigungsabschnitte 2c, 3c legen einen Anstellwinkel 6 des Arbeitsabschnitts 2b des inneren Zinkenschenkels 2 und einen oberen Anstellwinkel 7 des Arbeitsabschnitts 3b des äußeren Zinkenschenkels 3 jeweils gegenüber der Horizontalen in Arbeitsrichtung 4 fest. Die Arbeitsabschnitte 2b, 3b verlaufen im Anschluss an ihre Befestigungsabschnitte 2c, 3c vorzugsweise, aber nicht zwingend, mit identischen Anstellwinkeln 6, 7 und dort folglich parallel.

Der Arbeitsabschnitt 3b des äußeren Zinkenschenkels 3 läuft dem Arbeitsabschnitt 2b des inneren Zinkenschenkels 2 bezogen auf die Arbeitsrichtung 4 nach. Der in Arbeitsrichtung 4 definierte und größte zwischen innerem und äußerem Zinkenschenkel 2, 3 vorkommende Abstand wird hier als maximaler Nachlaufabstand 8 des äußeren Zinkenschenkels 3 bezeichnet.

Der Arbeitsabschnitt 3b des äußeren Zinkenschenkel 3 ist vorzugsweise bogenförmig und weist insbesondere unterhalb der Stelle / des Bereichs mit maximalem Nachlaufabstand 8 eine in Arbeitsrichtung 4 konkave Krümmung 9 auf. Diese bewirkt, dass der freie Endabschnitt 3a des äußeren Zinkenschenkels 3 um einen unteren Anstellwinkel 10 gegenüber der Horizontalen in Arbeitsrichtung 4 angestellt ist.

Der Bogen bzw. die Krümmung 9 weist eine oder mehrere Krümmungsradien von vorzugsweise wenigstens 200 mm und insbesondere wenigstens 400 mm auf.

Wie die Figur 1 erkennen lässt, sind die freien Endabschnitte 2a, 3a bezogen auf die Arbeitsrichtung 4 entgegengesetzt und nach unten hin aufeinander zu geneigt / gekrümmt. Folglich arbeitet der freie Endabschnitt 2a des inneren Zinkenschenkels 2 schleppend und der freie Endabschnitt 3a des äußeren Zinkenschenkels 3 Erntegut abhebend.

Der Anstellwinkel 6 des inneren Zinkenschenkels 2 beträgt beispielsweise 75-87°. Der obere Anstellwinkel 7 des äußeren Zinkenschenkels 3 beträgt dann vorzugsweise ebenso 75-87°. Der untere Anstellwinkel 10 des äußeren Zinkenschenkels 3 beträgt vorzugsweise 95 - 120°.

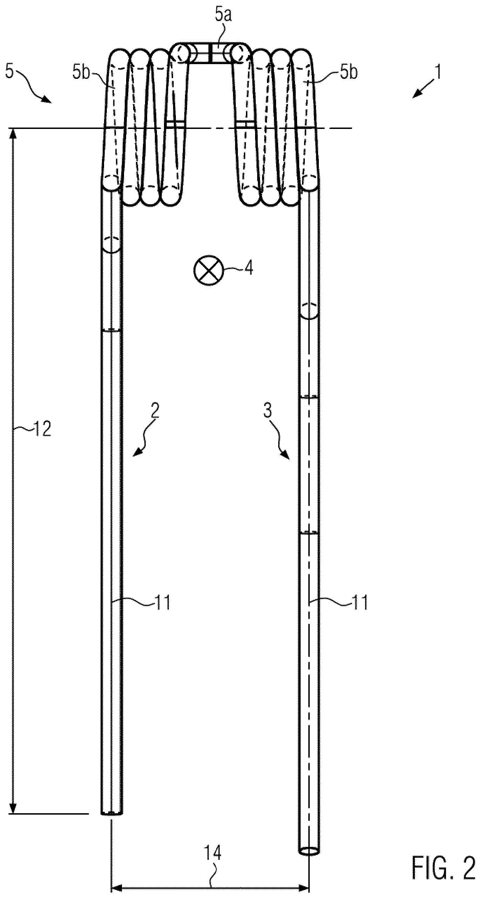

Wie die Figur 2 erkennen lässt, verlaufen sämtliche Krümmungen des inneren und äußeren Zinkenschenkels 2, 3 vorzugsweise in zur Arbeitsrichtung 4 parallelen Vertikalebenen 11. Somit sind die Zinkenschenkel 2, 3 insgesamt zur Arbeitsrichtung 4 parallel ausgerichtet und entsprechend tangential zu Kreisbahnen, entlang der die Zinkenschenkel 2, 3 im Arbeitsbetrieb umlaufen.

Der äußere Zinkenschenkel 3 ist länger als der innere Zinkenschenkel 2. Vorzugsweise ist die Arbeitslänge 12 des äußeren Zinkenschenkels 3 bezüglich der Aufhängung 5 um 1 bis 50 mm und insbesondere um 5 bis 25 mm größer als die Arbeitslänge 12 des inneren Zinkenschenkels 2. Durch die winklige Ausrichtung des Kreiselwenders zum Boden weisen beide Zinkenschenkel 2, 3 vorzugsweise einen im Wesentlichen gleichen Arbeitsabstand zur Grasnarbe auf. Vorstellbar ist aber auch eine im Wesentlichen gleiche Arbeitslänge 12 beider Zinkenschenkel 2, 3.

Im Vergleich der Figuren 1 und 2 ist ferner zu erkennen, dass ein entlang der Arbeitsrichtung 4 definierter Längsabstand 13 zwischen den freien Enden der Zinkenschenkel 2, 3 kleiner ist als ein quer zur Arbeitsrichtung 4 definierter Querabstand 14 zwischen den freien Enden bzw. den Endabschnitten 2a, 2b der Zinkenschenkel 2, 3.

Der Längsabstand 13 beträgt vorzugsweise höchstens 40 mm. Der Längsabstand 13 ist vorzugsweise gleich Null, so dass beide freien Enden der Zinkenschenkel 2, 3 auf einer gedachten Linie liegen, die orthogonal quer zur Arbeitsrichtung 4 verläuft. Der Querabstand 14 beträgt vorzugsweise wenigstens 60 mm und insbesondere wenigstens 100 mm.

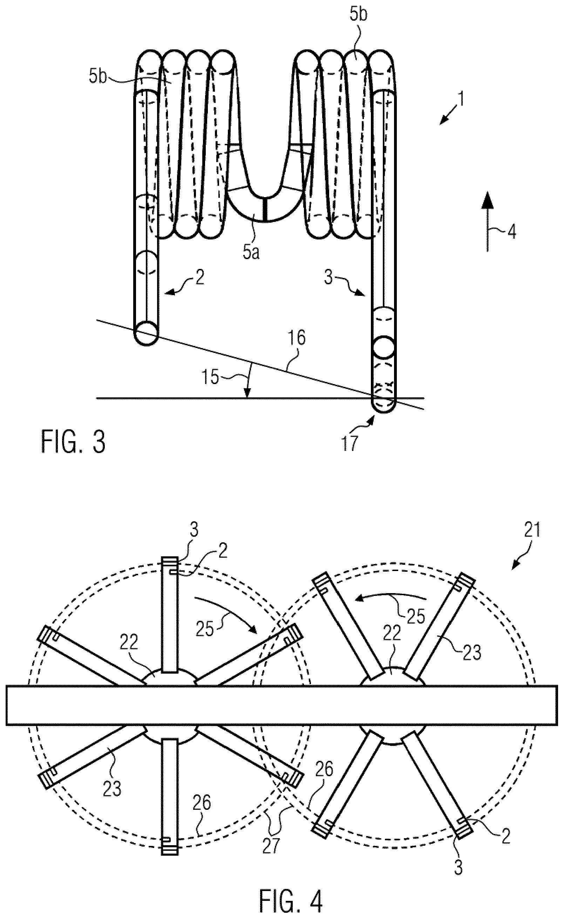

Die Figur 3 verdeutlicht von unten gesehen eine vorteilhafte Konfiguration des Federzinkens 1 mit einem Nachlaufwinkel 15, der prinzipiell in orthogonaler Draufsicht oder Ansicht von unten und quer zur Arbeitsrichtung 4 definiert ist. Der Nachlaufwinkel 15 erstreckt sich demnach bis zu einer gedachten Verbindungslinie 16, die vom freien Ende des inneren Zinkenschenkels 2 bis zum bezogen auf die Arbeitsrichtung 4 hintersten Bogenabschnitt 17 des äußeren Zinkenschenkels 3 verläuft, und somit bis zu dessen maximalem Nachlauf, siehe hierzu auch die Figur 1. Der Nachlaufwinkel 15 beträgt vorzugsweise 5-45°.

Der Federzinken 1 ist vorzugsweise aus einem Stück gefertigt und besteht beispielsweise aus einem kugelgestrahlten Rundstahldraht. Dieser hat beispielsweise einen Durchmesser von bis zu 11 mm. Andere Abmessungen, Materialien oder Materialqualitäten sind ebenso denkbar.

Die Figur 4 deutet beispielhaft einen Kreiselwender 21 mit zwei gegenläufigen Kreiseln 22 an. Die Kreisel 22 umfassen starr abstehende, also nicht um ihre Längsachsen drehbare Zinkenarme 23, an denen je ein Federzinken 1 mit innerem und äußerem Zinkenschenkel 2, 3 in Umlaufrichtung 25 umläuft. Das Arbeitsprinzip solcher Kreiselwender 21 ist bekannt und daher nicht weiter erläutert. Die Anzahl der Zinkenarme 23 pro Kreisel 22 kann vom gezeigten Beispiel selbstverständlich abweichen.

Mit dem Kreiselwender 21 und den Federzinken 1 kann Mähgut mit dem äußeren Zinkenschenkel 3 besonders effektiv aufgenommen werden. Der innere Zinkenschenkel 2 begünstigt durch seine Formgebung und entgegengesetzt geneigte Ausrichtung das zielgerichtete und rechtzeitige Abwerfen des Mähguts. Diese positiven Effekte werden durch eine tangentiale Ausrichtung der Zinkenschenkel 2, 3 bezüglich ihrer Umlaufbahnen 26, 27 noch verstärkt.

## Patentansprüche

1. Federzinken (1) zum Kreiselwenden landwirtschaftlichen Halm-/Blattguts, umfassend:
- einen bezüglich Umlaufrichtung (4) des Federzinkens (1) inneren Zinkenschenkel (2) mit einem freiem Endabschnitt (2a), der mit der Umlaufrichtung (4) einen vertikalen Winkel (6) von weniger als 90° ausbildet, und mit einem nach oben anschließenden Arbeitsabschnitt (2b); und
- einen bezüglich Umlaufrichtung (4) äußeren Zinkenschenkel (3) mit einem freien Endabschnitt (3a), der mit der Umlaufrichtung (4) einen vertikalen Winkel (10) von mehr als 90° ausbildet, und mit einem nach oben anschließenden Arbeitsabschnitt (3b), der gekrümmt und dem inneren Zinkenschenkel (2) nachlaufend ausgebildet ist.

2. Federzinken nach Anspruch 1, wobei der innere und äußere Zinkenschenkel (2, 3) im Wesentlichen in zur Umlaufrichtung (4) parallelen Vertikalebenen (11) verlaufen.

3. Federzinken nach Anspruch 1 oder 2, wobei die freien Enden des inneren und äußeren Zinkenschenkels (2, 3) quer zur Umlaufrichtung (4) in einem größeren Abstand (14) zueinander angeordnet sind als entlang der Umlaufrichtung (4).

4. Federzinken nach einem der vorigen Ansprüche, wobei die freien Enden des inneren und äußeren Zinkenschenkels (2, 3) quer zur Umlaufrichtung (4) in einem Abstand (14) von wenigstens 60 mm voneinander angeordnet sind.

5. Federzinken nach wenigstens einem der vorigen Ansprüche, wobei die freien Enden des inneren und äußeren Zinkenschenkels (2, 3) entlang der Umlaufrichtung (4) in einem Abstand (13) von höchstens 40 mm voneinander angeordnet sind.

6. Federzinken nach wenigstens einem der vorigen Ansprüche, wobei das freie Ende des äußeren Zinkenschenkels (3) bezüglich des freien Endes des inneren Zinkenschenkels (2) bezüglich der Umlaufrichtung (4) auf einer Linie oder nachlaufend angeordnet ist.

7. Federzinken nach wenigstens einem der vorigen Ansprüche, wobei eine in der Draufsicht gezogene Verbindungslinie (16) zwischen einem hintersten Bogenabschnitt (17) des äußeren Zinkenschenkels (3) und dem freien Ende des innenliegenden Zinkenschenkels (2) quer zur Umlaufrichtung (4) einen Nachlaufwinkel (15) von 5-45° ausbildet.

8. Federzinken nach wenigstens einem der vorigen Ansprüche, wobei der äußere Zinkenschenkel (3) einen maximalen Nachlaufabstand (8) von 20 bis 80 mm, insbesondere von 30 bis 60 mm, vom inneren Zinkenschenkel (2) aufweist.

9. Federzinken nach wenigstens einem der vorigen Ansprüche, wobei der äußere Zinkenschenkel (3) an seinem freien Ende mit der Umlaufrichtung (4) einen Anstellwinkel (10) von 95-120° aufspannt.

10. Federzinken nach wenigstens einem der vorigen Ansprüche, wobei der innere Zinkenschenkel (2) im insbesondere gesamten Arbeitsabschnitt (2b) geradlinig verläuft.

11. Federzinken nach wenigstens einem der vorigen Ansprüche, wobei der innere Zinkenschenkel (2) im Arbeitsabschnitt (2b) und/oder an seinem freien Ende einen Anstellwinkel (6) von 75-87° mit der Umlaufrichtung (4) aufspannt.

12. Federzinken nach wenigstens einem der vorigen Ansprüche, wobei der äußere Zinkenschenkel (3) länger ist als der innere Zinkenschenkel (2), insbesondere um 1 bis 50 mm.

13. Federzinken nach wenigstens einem der vorigen Ansprüche, wobei der innere und äußere Zinkenschenkel (2, 3) im Wesentlichen die gleiche Arbeitslänge (12) aufweisen.

14. Federzinken nach wenigstens einem der vorigen Ansprüche, ferner mit Federwendeln (5b), die die äußeren und inneren Zinkenschenkel (2, 3) mit einem zentralen Befestigungsabschnitt (5a) des Federzinkens (1) einstückig verbinden.

15. Kreiselwender (21) für landwirtschaftliches Halm- und/oder Blattgut, umfassend wenigstens zwei gegenläufig drehbare Kreisel (22) mit davon starr abstehenden Zinkenarmen (23), an denen Federzinken (1) nach wenigstens einem der vorigen Ansprüche befestigt sind.

## Claims

1. Spring tine (1) for tedding agricultural stalks/leaves, comprising:
- one inner tine leg (2) with respect to the direction of rotation (4) of the spring tine (1) having a free end portion (2a), which forms a vertical angle (6) of less than 90° with the direction of rotation (4), and having a working portion (2b) adjoining at the top; and
- one outer tine leg (3) with respect to the direction of rotation (4) having a free end portion (3a), which forms a vertical angle (10) of more than 90° with the direction of rotation (4), and having a working portion (3b) adjoining at the top which is curved and is designed to trail the inner tine leg (2).

2. Spring tine according to claim 1, wherein the inner and outer tine legs (2, 3) extend substantially in vertical planes (11) parallel to the direction of rotation (4).

3. Spring tine according to either claim 1 or claim 2, wherein the free ends of the inner and outer tine legs (2, 3) are arranged transversely to the direction of rotation (4) at a greater distance (14) from one another than in the direction of rotation (4).

4. Spring tine according to any of the preceding claims, wherein the free ends of the inner and outer tine legs (2, 3) are arranged transversely to the direction of rotation (4) at a distance (14) of at least 60 mm from one another.

5. Spring tine according to at least one of the preceding claims, wherein the free ends of the inner and outer tine legs (2, 3) are arranged in the direction of rotation (4) at a distance (13) of at most 40 mm from one another.

6. Spring tine according to at least one of the preceding claims, wherein the free end of the outer tine leg (3) is arranged on a line or trailing with respect to the free end of the inner tine leg (2) with respect to the direction of rotation (4).

7. Spring tine according to at least one of the preceding claims, wherein a connecting line (16), drawn in plan view, between a rearmost arc portion (17) of the outer tine leg (3) and the free end of the inner tine leg (2) forms a trailing angle (15) of 5-45° transversely to the direction of rotation (4).

8. Spring tine according to at least one of the preceding claims, wherein the outer tine leg (3) has a maximum trailing distance (8) of 20 to 80 mm, in particular of 30 to 60 mm, from the inner tine leg (2).

9. Spring tine according to at least one of the preceding claims, wherein the outer tine leg (3), at its free end, spans a setting angle (10) of 95-120° with the direction of rotation (4).

10. Spring tine according to at least one of the preceding claims, wherein the inner tine leg (2) extends in a straight line in the in particular entire working portion (2b).

11. Spring tine according to at least one of the preceding claims, wherein the inner tine leg (2), in the working portion (2b) and/or at its free end, spans a setting angle (6) of 75-87° with the direction of rotation (4).

12. Spring tine according to at least one of the preceding claims, wherein the outer tine leg (3) is longer than the inner tine leg (2), in particular by 1 to 50 mm.

13. Spring tine according to at least one of the preceding claims, wherein the inner and outer tine legs (2, 3) have substantially the same working length (12).

14. Spring tine according to at least one of the preceding claims, further comprising spring coils (5b) which integrally connect the outer and inner tine legs (2, 3) to a central fastening portion (5a) of the spring tine (1).

15. Tedder (21) for agricultural stalks and/or leaves, comprising at least two counter-rotary gyros (22) having tine arms (23) rigidly protruding therefrom to which spring tines (1) according to at least one of the preceding claims are fastened.

## Revendications

1. Dent à ressort (1) pour le fanage de paille/produits feuillus, comprenant :
- une patte de dent interne (2) par rapport au sens de la circonférence (4) de la dent à ressort (1) et qui présente une portion d'extrémité libre (2a), qui forme un angle vertical (6) inférieur à 90° par rapport au sens de la circonférence (4), et ayant une section de travail (2b) adjacente vers le haut ; et
- une patte de dent externe (3) ayant une portion d'extrémité libre (3a) par rapport au sens de la circonférence (4), qui forme un angle vertical (10) de plus de 90° par rapport au sens de la circonférence (4), et ayant une section de travail adjacente vers le haut (3b) , qui est incurvée et conçue pour suivre la patte de dent interne (2).

2. Dent à ressort selon la revendication 1, les pattes de dent interne et externe (2, 3) s'étendant principalement dans les plans verticaux (11) parallèles au sens de la circonférence (4).

3. Dent à ressort selon la revendication 1 ou 2, les extrémités libres des pattes de dent interne et externe (2, 3) étant disposées à une distance (14) plus grande l'une de l'autre de manière transversale par rapport au sens de la circonférence (4) que le long du sens de la circonférence (4).

4. Dent à ressort selon l'une des revendications précédentes, les extrémités libres des pattes de dent interne et externe (2, 3) étant disposées sous une distance (14) d'au moins 60 mm l'une de l'autre de manière transversale par rapport au sens de la circonférence (4).

5. Dent à ressort selon au moins l'une des revendications précédentes, les extrémités libres des pattes de dent interne et externe (2, 3) étant disposées sous une distance (13) d'au plus 40 mm l'une de l'autre le long du sens de la circonférence (4).

6. Dent à ressort selon au moins l'une des revendications précédentes, l'extrémité libre de la patte de dent externe (3) étant disposée sur une ligne ou à l'arrière par rapport à l'extrémité libre de la patte de dent interne (2) par rapport au sens de la circonférence (4).

7. Dent à ressort selon au moins l'une des revendications précédentes, une ligne de liaison dans la vue en plan (16) entre une section d'arc la plus en arrière (17) de la patte de dent externe (3) et l'extrémité libre de la patte de dent interne (2) formant un angle de chasse (15) de 5 à 45° transversalement par rapport au sens de la circonférence (4).

8. Dent à ressort selon au moins l'une des revendications précédentes, la patte de dent externe (3) ayant une distance de chasse maximale (8) de 20 à 80 mm, en particulier de 30 à 60 mm, depuis la patte de dent interne (2).

9. Dent à ressort selon au moins l'une des revendications précédentes, la patte de dent externe (3) à son extrémité libre s'étendant sous un angle d'attaque (10) de 95 à 120° dans le sens de la circonférence (4).

10. Dent à ressort selon au moins l'une des revendications précédentes, la patte de dent interne (2) s'étendant en particulier selon une ligne droite dans la section entière de travail (2b).

11. Dent à ressort selon au moins l'une des revendications précédentes, la patte de dent interne (2) dans la section de travail (2b) et/ou à son extrémité libre s'étendant sous un angle d'attaque (6) de 75 à 87° dans le sens de la circonférence (4).

12. Dent à ressort selon au moins l'une des revendications précédentes, la patte de dent externe (3) étant plus longue que la patte de dent interne (2), en particulier de 1 à 50 mm.

13. Dent à ressort selon au moins l'une des revendications précédentes, les pattes de dent interne et externe (2, 3) ayant essentiellement la même longueur de travail (12).

14. Dent à ressort selon au moins l'une des revendications précédentes, comprenant en outre des spirales de ressort (5b), qui relient intégralement les pattes de dent interne et externe (2, 3) à une portion d'attache centrale (5a) de la dent à ressort (1).

15. Machine de fanage (21) pour le fanage de paille/produits feuillus, comprenant au moins deux rotors rotatifs (22) qui peuvent tourner dans des sens opposés et qui présentent des bras de dent (23) qui sont reliés de manière rigide à ceux-ci, et sur lesquels les dents à ressort (1) selon au moins l'une des revendications précédentes sont fixées.
